# EUROPEAN PATENT SPECIFICATION

(11) **EP 1 465 368 B1**
(45) Date of publication and mention of the grant of the patent: **13.12.2006**
(21) Application number: 04251141.0
(22) Date of filing: 27.02.2004
(51) Int. Cl.: H04L 12/26

(54) **Traffic monitoring system in a packet switched network with wireless connected data aggregation node**
Verkehrsüberwachungssystem in einem Paketvermittlungsnetz mit drahtlos verbundenem Datensammelknoten
Système de surveillance du trafic dans un réseau à commutation par paquets avec noeuds connecté sans fil pour l'aggrégation de données

(30) Priority: 04.04.2003 US 407719
(43) Date of publication of application: 06.10.2004
(73) Proprietor: Agilent Technologies, Inc., Palo Alto, CA 94306 (US)
(72) Inventor: Tudor, Alexander, Mountain View, CA 94043 (US); Liu, Allan, Oakland, CA 94606 (US)
(74) Representative: Jehan, Robert

(56) References cited:
- EP-A- 1 376 934
- WO-A-01/63838
- WO-A-02/091674
- US-A- 6 041 042
- US-B1- 6 185 203
- US-B1- 6 292 108

## Description

The present invention pertains to the art of monitoring traffic on a digital network.

Routers and switches are key components in packet-switched networks ranging from small local-area-networks, to intranets within an organization, to the Internet. As their names imply, they route and switch packets of information from sources to their destinations.

Some high-end routers and switches offer the ability to mirror the traffic on any port of the device to a dedicated mirroring port. Here, mirroring refers to the process of making a one-to-one copy of the packets on a port and sending the resulting packets to the dedicated mirroring port. This allows the administrator to monitor the traffic on selected ports, and use the information, such as control information, for monitoring, administrative, or diagnostic purposes.

A number of problems are presented by current implementations of port mirroring.

First, this functionality is only available on expensive high-end routers and switches. Next, programmable packet filtering is not always supported in the mirroring process. Consequently, all packets are mirrored. An additional problem occurs because the dedicated mirror port generally has the same effective bandwidth as the ports being mirrored. As a result, attempts to monitor more than one port simultaneously can saturate the mirror port, causing packets to be dropped. In many applications, dropped packets cannot be tolerated. A further complication is that the process of mirroring requires processing resources from the router. If the router is busy doing its primary job of routing, the mirroring process is disrupted and put on hold. It is during these buy periods that the mirroring process is most useful, but given today's systems, the mirroring process is not available during these busy periods.
WO 01/63838 discloses a network switch including multiple mirroring ports each connected to a monitoring device.
US 6,292,108 discloses a monitoring system in which data acquisition devices transmit information to a central data collection device.
The present invention seeks to provide improved traffic monitoring.
According to an aspect of the present invention there is provided a system for suggesting information for an information carrier as specified in claim 1.
According to another aspect of the present invention there is provided a filtering node as specified in claim 6.
Mirroring with packet filtering is provided on a per-port basis by client modules. Client modules communicate by a wireless link with an aggregation service or module. Each client module contains an input port, an output port, and a monitoring system connected to a wireless link. The aggregation module contains a wireless link, an aggregation core, and an output port.
Embodiments of the present invention are described below, by way of example only, with reference to the accompanying drawings, in which:
Fig. 1 shows an interface module (PRIOR ART),
Fig. 2 shows an embodiment of a client module,
Fig. 3 is a block diagram of an embodiment of a monitor core,
Fig. 4 shows an embodiment of an aggregation module, and
Fig. 5 is a block diagram of an embodiment of an aggregation core.
Concurrent monitoring of packet traffic on multiple interfaces on a switch or router in a digital network is difficult to perform. It is usually impractical for cost reasons to install packet analyzers on each interface in question. While the general idea of port mirroring can be used to monitor multiple ports at the same time, its implementation in today's high-end routers and switches leaves much to be desired. The dedicated mirroring port can be easily saturated and the mirroring process can be disrupted during peak traffic periods.

Yet in most instances, the administrator performing the monitoring is only interested in particular aspects of the traffic, such as control traffic, messages of a certain type or protocol, messages containing certain addresses, or the like.

As transmission speeds of digital packet networks increase, the trend is to move from electrical signaling to optical communications for longer distances. A typical known scheme is Gigabit Ethernet, which defines an electrical signaling scheme as well as an optical scheme using a pair of optical fibers, one for traffic in each direction. While optical signal transmission has many benefits, the information they carry must be converted back to the electrical domain when such signals arrive at switches and routers. One approach to this used by many manufacturers is to use an interface converter module. One form of such a module is known as a GBIC, or GigaBit Interface Converter. Modules in the GBIC and SFP form factor are manufactured by companies such as Agilent Technologies, Finisar, JDS Uniphase, Infineon, Methode, and E20. Modules in the XENPAK form factor are manufactured by Agilent Technologies, JDS Uniphase, Opnext, and Mitsubishi. The X2 form factor is supported by Agilent Technoloties and JDS Uniphase. The XPAK form factor is supported by Intel and Infineon. XFP is supported by Agilent Technologies, Finisar, Intel, JDS Uniphase, E20, Ignis, and Opnext.

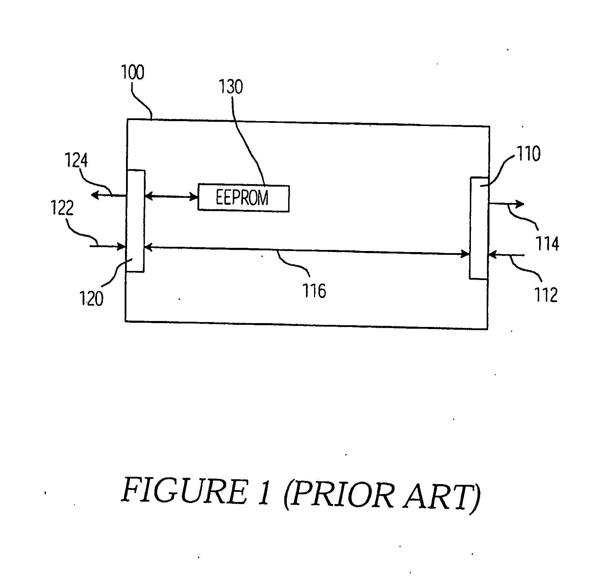

Fig. **1** shows a typical interface converter module **100** as known to the art. A first interface **110** accepts receive signal **112** and produces transmit signal **114** for a network. For an optical interface such as for short haul or long haul optical fiber, interface **110** typically includes a high-speed photodiode detector and associated shaping circuitry for converting optical receive signal **112** to electrical form, and a laser diode with control circuitry for generating optical output **114** for the electrical form. Gigabit Ethernet may also use copper wires. In such a case, interface **110** takes care of signal level conversion for transmit and receive data. Data and control signals **116** flow between interface **110** and host electrical interface **120**, which has input signal **122**, output signal **124**, and control signals not shown. Host interface **120** connects module **100** to the switch, router, or other device. Also present in interface converter **100** is EEPROM **130**, which is used to store information such as serial numbers, device characteristics, operating information, as well as manufacturer proprietary identification information.

It is common for switches and routers to rely on conversion modules to convert signals from their external form, electrical or optical, to the proper electrical levels needed for their internal use. As such, a switch or router may have a plurality of interface converter modules present, one for each port.

The preferred embodiments provide for traffic mirroring with packet filtering by providing an enhanced interface converter module which contains monitoring circuitry and a wireless data link which may communicate with a similar wireless data link in an aggregation module, or with any monitoring equipment configured with a similar wireless link and authorized to receive the information. This allows traffic to be monitored on any port or a plurality of ports using the enhanced interface converter module.

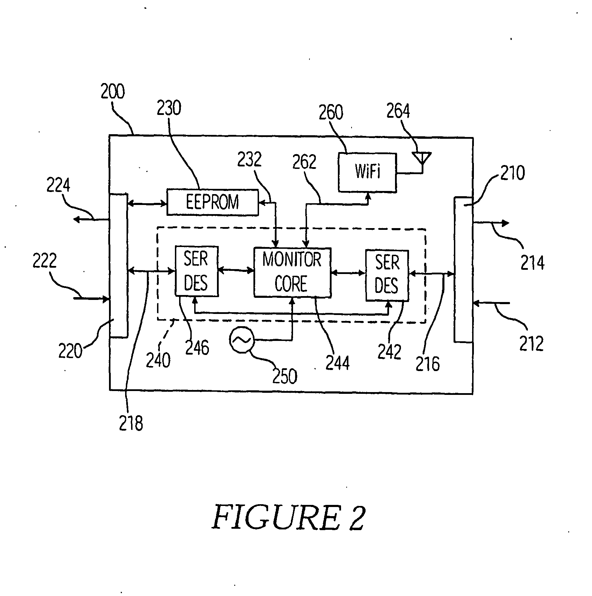

Fig. 2 shows a preferred interface converter module with monitoring capabilities. Module **200** has input interface **210** for input signal **212** and output signal **214**. For Gigabit Ethernet, interface **210** may be electrical or optical. Data **216** is passed to monitor subsystem **240** for processing. Clock **250** provides reference timing for monitor subsystem **240**. Data **218** is passed to host interface **220** with input data **222**, output data **224**, and control lines not shown. EEPROM **230** connects to output interface **220**, as well as to monitor subsystem **240**, providing configuration data. For clarity, features not central to the invention such as power regulation are not shown.

In one embodiment of the invention, monitor subsystem **240** has a first serializer-deserializer **242** which passes data **216** to monitor core **244**, providing functionality such as 8B/10B or 4B/5B data encoding/decoding and clock recovery. Monitor core performs the required monitoring functions, passing data to serializer-deserializer **246** which generates signals **218** for output module **220.** Note that the monitor subsystem **240** does not modify the contents of the data passing between interfaces **210** and **220** nor does it impede the flow of data between the two interfaces. For the packets passing between interfaces **210** and **220** that match a set of criteria, the monitor core **244** selects them for transmission over the wireless interface **260** and antenna **264.** In the preferred embodiment, wireless interface **260** is a WiFi chipset implementing one of the known 802.11 protocols such as 802.11b. Antenna **264** may be part of module **200**, or provision may be made for providing an antenna external to module **200**. Configuration of monitor subsystem **240** may be provided **232** through EEPROM **230**, or through data transferred **262** over the WiFi link provided by wireless link **260** and antenna **264**.

In the preferred embodiment, monitor subsystem **240** is implemented on a single chip. It may also be implemented as multiple chips. While the design shown in Fig. **2** takes data **216** from interface **210** and passes it through serializer-deserializer **242** and through monitor core **244** to serializer-deserializer **246,** which reclocks and regenerates signals **218** for output interface **220**, another approach would be to passively tap a direct electrical connection between interfaces **210** and **220,** performing the monitoring function without reclocking and regenerating the data between interfaces **210** and **220.**

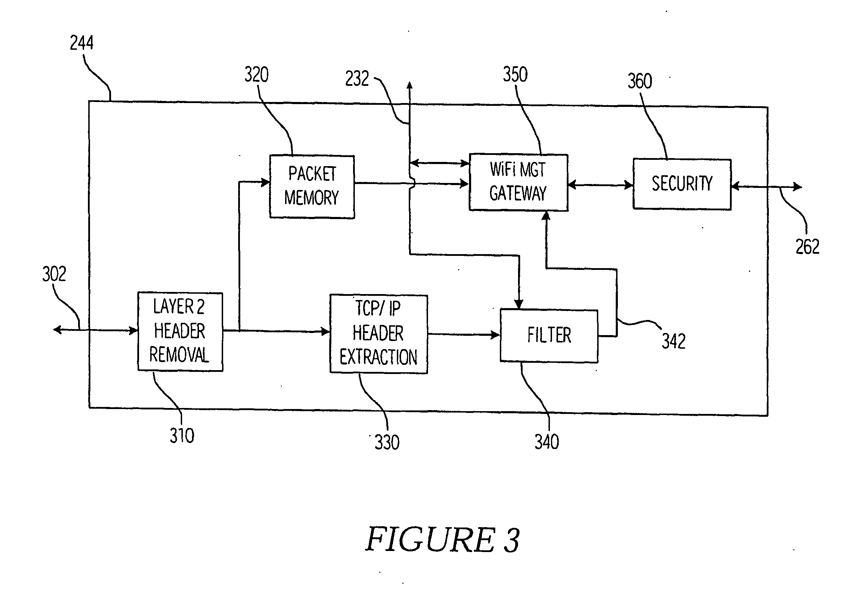

Fig. **3** shows a block diagram of a portion of monitor core **244**. Fig. **3** shows the receive path, that is, the monitoring path for signals passing from input **212** of interface **210** through to output **224** of host interface **220**. Similar circuitry is provided for the transmit path which monitors signals from input **222** of interface **220** passing to output **214** of interface **210**. Deserialized and decoded input data **302** is stripped **310** of OSI layer 2 headers; one example of such header is the Ethernet header. The output from **310** are known OSI layer 3 packets. The resulting packet data is sent to packet memory **320** and through the layer 3 and layer 4 header extraction process **330** to filter **340**; one such set of header is the IP header(layer 3) and TCP header(layer 4). Layer 3 and layer 4 header extraction **330** takes as input the OSI layer 3 packets and outputs the layer 3 and layer 4 headers to the filter engine **340**. Filter engine **340** is configured **232** by data from EEPROM **230** of Fig. 2, or from data passed by WiFi management gateway **350**. When filter **340** recognizes information of interest, it signals **342** gateway **350** which sends the appropriate data from packet memory **320** through security block **360** which then sends **262** the data to WiFi wireless link **260** of Fig. **2.**

The security block **360** optionally performs encryption and authentication services. The information collected by the monitor core **244** can be used, for example, to construct a complete map of the network being monitored. Such information can easily be used for malicious purposes such as to construct complicated attacks against the network. To guard against the information falling into the wrong hands, encryption and authentication services are provided. Data leaving the module **200** via the wireless link will be encrypted. Data entering the module **200** via the wireless link will be authenticated. Generally, the data entering the module via the wireless link is configuration data. To guard against unauthorized changes to the configuration of the module, an authentication process will be performed on all incoming packets. Only packets from a legitimate source will be accepted. A number of public protocols are available to provide both the encryption and authentication function; one such protocol is the IP Security Protocol (IPSec).

Used in this fashion, monitoring modules are placed on ports of interest, replacing standard interface converter modules with monitoring interface converter modules as described. Since the monitoring modules communicate with the aggregation service or module using a wireless link, by definition extra wiring does not have to be provided. In an alternate embodiment, monitor modules having the same interface on both ports, such as optical or electrical, may be placed in-line, not replacing the interface converter modules of the selected device. The monitor modules of such an embodiment may require an external power source, particularly if they are placed in-line in an optical path.

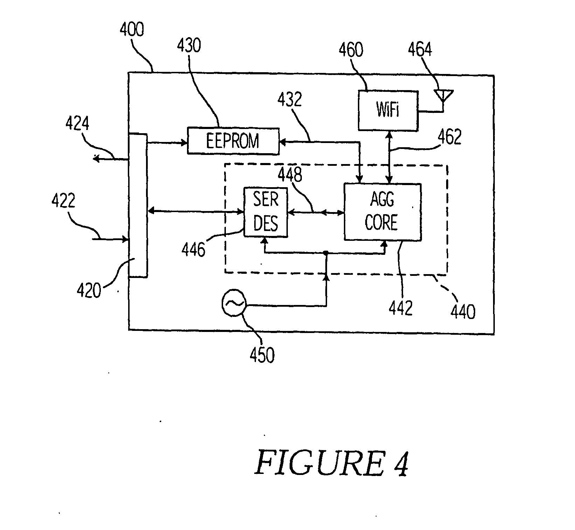

Aggregation of monitored data from one or more monitoring modules is performed by an aggregation module as shown in Fig. **4**. Module **400** provides aggregated data through host interface **420**, using input **422**, output **424**, and control lines not shown. EEPROM **430** stores identification information and may be used to store parameters. Data from one or more monitoring modules is received through antenna **464** and wireless link **460**. This data is passed **462** to aggregation module **440**. Aggregation core **442** gathers and formats the information, using configuration information **432** from EEPROM **430** or directly from interface **420**. The resulting information is passed **448** to serializer-deserializer **446** and sent to host interface **420**. Clock **450** provides a reference for aggregation core **442** and serializer-deserializer **446**. While the preferred embodiment packages aggregation module **400** is the same interface converter module package used for the monitoring modules, the aggregation module need not take that form factor. Similarly, while antenna **464** is part of module **400** in the preferred embodiment, it may also be placed external to the module.

Note that the aggregation module **400** is a valid layer 2 or layer 3 endpoint. Likewise it has a valid layer 2 address, such as an Ethernet MAC address and a layer 3 address, such as an IP address. As such, it is fully accessible from the network it is attached to. This connection allows the aggregation module **400** to be remotely configured via the interface **420**. To prevent unauthorized configuration of the module, all data coming in via interface **420** will be authenticated.

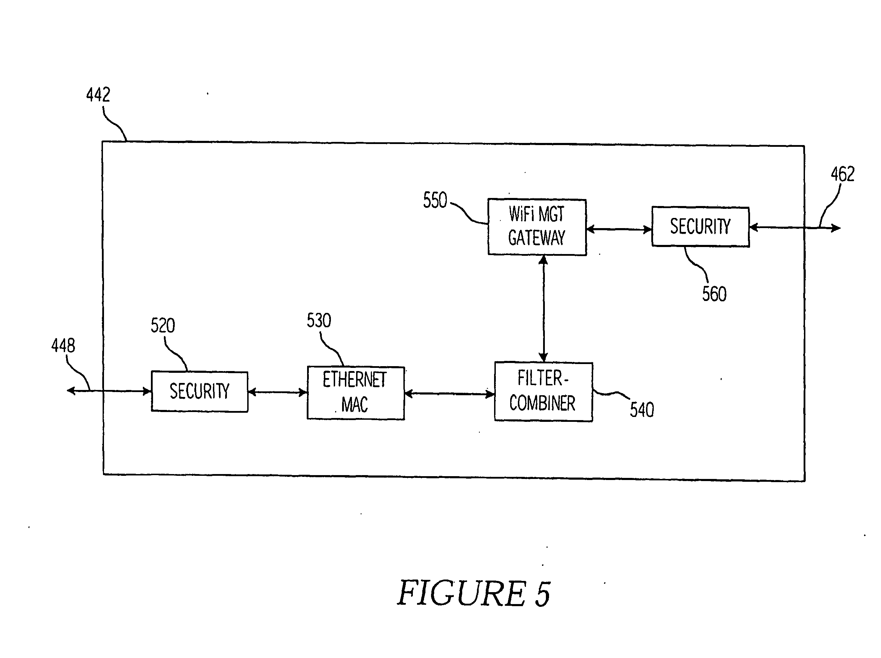

Fig. **5** shows a block diagram of aggregation core **442**. Data **462** to and from the wireless link passes through security module **560**. Data reduction **540** provides for further filtering and processing of data. It is important to note that the aggregator module is fully capable of reducing the amount of data that needs to be sent via interface **420**. For example, the aggregator module keeps counters based on data received from the client module. The counter values need only be periodically transmitted over interface **420.** A practical example of such a capability is to count the number of prefixes received from a Border Gateway Protocol (BGP) peer during a given time period. The data analysis equipment does not need to receive all protocol messages. Further data reduction can occur when the counters are programmed to transmit data over interface **420** only when pre-programmed thresholds have been reached. The processed data is passed to a layer 2 media access controller (MAC) **530**, such as Ethernet layer 2 MAC **530** communicates through security block 520 and then **448** with serializer-deserializer **446** of Fig. **4** to provide standard layer 2 communications capability for the aggregation module. Security block 520 provides optional authentication and encryption services for the data communicated to the information consumer.

The aggregation process may also be undertaken by any node with a compatible wireless link which is authenticated to receive data. The aggregation process may be provided, for example by a laptop or other programmable computer equipped with a suitable wireless interface and operating software as the information consumer.

The foregoing detailed description of the present invention is provided for the purpose of illustration and is not intended to be exhaustive or to limit the invention to the precise embodiments disclosed. Accordingly the scope of the present invention is defined by the appended claims.

## Claims

1. A filtering node (200) for connecting between a packet-switched digital network and a port of a packet-switched digital networking device, the filtering node including:
a single input port (210) for communicating with the packet-switched digital network;
a single output port (220) for communicating with the packet-switched digital networking device;
communications means (240) for passing Information between the input port and the output port; and,
filtering means (244) connected to the communications means (240) for filtering information passing between the input port (210) and the output port (220) and passing the filtered information to a third port (260).

2. A filtering node (200) as in claim 1, wherein the input port (210) is an electrical port, or an optical port

3. A filtering node (200) as In claim 1 or 2, wherein the third port (260) is a wireless communications port optionally providing authentication and/or encryption.

4. A filtering node (200) as in claim 1, 2 or 3, embedded in a module with a form factor interoperable with one or more of the GBIC, SFP, XENPAK, X2, XPAK, or XFP form factors.

5. A filtering node (200) as in any preceding claim, wherein the communication means (240) and/or the filtering means (244) is/are configurable via said third port.

6. An interface converter module comprising a filtering node (200) as In any preceding claim.

7. A system for aggregating information for an information consumer in a packet-switched digital network Including one or more filtering nodes (200) as claimed in any preceding claim and an aggregation node (400) wherein:
each filtering node (200) is arranged to connect between the packet-switched digital network and a port of a packet-switched digital networking device, the third port (260) of each filtering node being configured to communicate the filtered information to the aggregation node (400);
the aggregation node (400) having a first port (460) for communicating with the one or more filtering nodes (200), the aggregation node (400) being arranged to aggregate the filtered information and pass the aggregated information to an information consumer on a second port (420).

8. A system as in claim 7, wherein communications between each filtering node (200) and the aggregation node (400) are encrypted and/or authenticated.

9. A system as in claim 7 or 8, wherein communications between the aggregation node (400) and the information consumer and encrypted and/or authenticated.

10. A system as in any of claims 7, 8 or 9, wherein the aggregation node (400) is a stand-alone device, or is embedded in a module with a form factor interoperable with one or more of the GBIC, SFP, XENPAK, X2, XPAK, or XFP form factors.

## Patentansprüche

1. Ein Filterknoten (200) zum Verbinden zwischen einem paketvermittelten digitalen Netz und einem Tor eines paketvermittelten digitalen Vernetzungsgeräts, wobei der Filterknoten folgende Merkmale umfasst:
ein einzelnes Eingangstor (210) zum Kommunizieren mit dem paketvermittelten digitalen Netz;
ein einzelnes Ausgangstor (220) zum Kommunizieren mit dem paketvermittelten digitalen Vernetzungsgerät;
eine Kommunikationseinrichtung (240) zum Leiten von Informationen zwischen dem Eingangstor und dem Ausgangstor; und
eine Filtereinrichtung (244), die mit der Kommunikationseinrichtung (240) verbunden ist, zum Filtern von Informationen, die zwischen dem Eingangstor (210) und dem Ausgangstor (220) geleitet werden, und Leiten der gefilterten Informationen an ein drittes Tor (260).

2. Ein Filterknoten (200) gemäß Anspruch 1, bei dem das Eingangstor (210) ein elektrisches Tor oder ein optisches Tor ist.

3. Ein Filterknoten (200) gemäß Anspruch 1 oder 2, bei dem das dritte Tor (260) ein drahtloses Kommunikationstor ist, das optional Authentifizierung und/oder Verschlüsselung liefert.

4. Ein Filterknoten (200) gemäß Anspruch 1, 2 oder 3, der in ein Modul mit einem Formfaktor eingebettet ist, der mit einem oder mehreren der GBIC-, SFP-, XENPAK-, X2-, XPAK- oder XFP-Formfaktoren interoperabel ist.

5. Ein Filterknoten (200) gemäß einem der vorhergehenden Ansprüche, bei dem die Kommunikationseinrichtung (240) und/oder die Filtereinrichtung (244) über das dritte Tor konfigurierbar ist/sind.

6. Ein Schnittstellenwandlermodul, das einen Filterknoten (200) gemäß einem der vorhergehenden Ansprüche umfasst.

7. Ein System zum Ansammeln von Informationen für einen Informationsverbraucher in einem paketvermittelten digitalen Netz, das einen oder mehrere Filterknoten (200) gemäß einem der vorhergehenden Ansprüche und einen Ansammlungsknoten (400) umfasst, wobei:
jeder Filterknoten (200) angeordnet ist, um zwischen dem paketvermittelten digitalen Netz und einem Tor eines paketvermittelten digitalen Vernetzungsgeräts zu verbinden, wobei das dritte Tor (260) jedes Filterknotens konfiguriert ist, um die gefilterten Informationen zu dem Ansammlungsknoten (400) zu kommunizieren;
wobei der Ansammlungsknoten (400) ein erstes Tor (460) zum Kommunizieren mit dem einen oder den mehreren Filterknoten (200) aufweist, wobei der Ansammlungsknoten (400) angeordnet ist, um die gefilterten Informationen anzusammeln und die angesammelten Informationen auf einem zweiten Tor (420) an einen Informationsverbraucher weiterzuleiten.

8. Ein System gemäß Anspruch 7, bei dem die Kommunikation zwischen jedem Filterknoten (200) und dem Ansammlungsknoten (400) verschlüsselt und/oder authentifiziert ist.

9. Ein System gemäß Anspruch 7 oder 8, bei dem die Kommunikation zwischen dem Ansammlungsknoten (400) und dem Informationsverbraucher verschlüsselt und/oder authentifiziert ist.

10. Ein System gemäß einem der Ansprüche 7, 8 oder 9, bei dem der Ansammlungsknoten (400) ein unabhängiges Gerät ist oder in ein Modul mit einem Formfaktor eingebettet ist, der mit einem oder mehreren der GBIC-, SFP-, XENPAK-, X2-, XPAK- oder XFP-Formfaktoren interoperabel ist.

## Revendications

1. Noeud (200) de filtrage pour connexion entre un réseau numérique de commutation par paquets et un port de dispositif de mise en réseau numérique de commutation par paquets, le noeud de filtrage comprenant :
• un port (210) d'entrée unique pour communiquer avec le réseau numérique de commutation par paquets ;
• un port (220) de sortie unique pour communiquer avec le dispositif de mise en réseau numérique de commutation par paquets ;
• un moyen (240) de communication destiné à acheminer des informations entre le port d'entrée et le port de sortie ; et
• un moyen (244) de filtrage, connecté au moyen (240) de communication, destiné à filtrer des informations acheminées entre le port (210) d'entrée et le port (220) de sortie et à acheminer les informations filtrées vers un troisième port (260).

2. Noeud (200) de filtrage selon la revendication 1, dans lequel le port (210) d'entrée est un port électrique ou un port optique.

3. Noeud (200) de filtrage selon la revendication 1 ou 2, dans lequel le troisième port (260) est un port de communication sans fil assurant en option, l'authentification et/ou le chiffrement.

4. Noeud (200) de filtrage selon la revendication 1, 2 ou 3, intégré à un module avec un facteur de forme interopérable avec un ou plusieurs des facteurs de forme GBIC, SFP, XENPAK, X2, XPAK ou XFP.

5. Noeud (200) de filtrage selon l'une quelconque des revendications précédentes, dans lequel le moyen (240) de communication et/ou le moyen (244) de filtrage est/sont configurable(s) via ledit troisième port.

6. Module de conversion d'interface comprenant un noeud (200) de filtrage selon l'une quelconque des revendications précédentes.

7. Système pour regrouper des informations pour un consommateur d'informations dans un réseau numérique de commutation par paquets comprenant un ou plusieurs noeud(s) (200) de filtrage selon l'une quelconque des revendications précédentes et un noeud (400) d'agrégation, dans lequel :
• chaque noeud (200) de filtrage est agencé pour se connecter entre le réseau numérique de commutation par paquets et un port de dispositif de mise en réseau numérique de commutation par paquets, le troisième port (260) de chaque noeud de filtrage étant configuré pour communiquer les informations filtrées au noeud (400) d'agrégation ;
• le noeud (400) d'agrégation ayant un premier port (460) pour communiquer avec le ou les noeud (s) (200) de filtrage, le noeud (400) d'agrégation étant agencé pour agréger les informations filtrées et transférer les informations agrégées vers un consommateur d'informations sur un deuxième port (420).

8. Système selon la revendication 7, dans lequel des communications entre chaque noeud (200) de filtrage et le noeud (400) d'agrégation sont chiffrées et/ou authentifiées.

9. Système selon la revendication 7 ou 8, dans lequel des communications entre le noeud (400) d'agrégation et le consommateur d'informations sont chiffrées et/ou authentifiées.

10. Système selon l'une quelconque des revendictions 7, 8 ou 9, dans lequel le noeud (400) d'agrégation est un dispositif autonome ou est intégré à un module avec un facteur de forme interopérable avec un ou plusieurs des facteurs de forme GBIC, SFP, XENPAK, X2, XPAK ou XFP.
